# EUROPÄISCHE PATENTSCHRIFT

(11) **EP 3 155 454 B1**
(45) Veröffentlichungstag und Bekanntmachung des Hinweises auf die Patenterteilung: **10.08.2022**
(21) Anmeldenummer: 15727968.8
(22) Anmeldetag: 09.06.2015
(51) Int. Cl.: G01S 19/47, G01C 21/16, G01S 19/49

(54) **VERFAHREN UND SYSTEM ZUR ANPASSUNG EINES NAVIGATIONSSYSTEMS**
METHOD AND SYSTEM FOR ADAPTING A NAVIGATION SYSTEM
PROCÉDÉ ET SYSTÈME D'ADAPTATION D'UN SYSTÈME DE NAVIGATION

(30) Priorität: 11.06.2014 DE 102014211171
(43) Veröffentlichungstag der Anmeldung: 19.04.2017
(73) Patentinhaber: Continental Automotive Technologies GmbH, 30165 Hannover (DE)
(72) Erfinder: STEINHARDT, Nico, 60327 Frankfurt (Main) (DE)
(74) Vertreter: Continental Corporation
(86) Internationale Anmeldenummer: PCT/EP2015/062761
(87) Internationale Veröffentlichungsnummer: WO 2015/189165

(56) Entgegenhaltungen:
- EP-A2- 2 378 248
- WO-A2-02/086533
- DE-A1-102012 216 215
- DE-A1-102012 219 478
- US-A1- 2005 251 328

## Beschreibung

Die Erfindung betrifft ein Verfahren zur Verifizierung von Messdaten gemäß Oberbegriff von Anspruch 1, ein System zur Anpassung eines Navigationssystems gemäß Oberbegriff von Anspruch 9 sowie eine Verwendung des Systems.

Alle Messdaten sind prinzipiell fehlerbehaftet und in vielen Fällen ist zudem eine durchgängige Verfügbarkeit der Messdaten nicht gegeben. Neben der Abhängigkeit der Messdaten von sensorinhärenten Eigenschaften sind die Messdaten darüber hinaus oftmals auch von Umgebungsbedingungen abhängig. Sensorfehler bzw. Messfehler lassen sich dabei in quasistationäre, über mehrere Messungen konstante Anteile, wie z.B. einen sog. Offset, und statistische, von Messung zu Messung zufällige Anteile, wie z.B. Rauschen, unterteilen. Während die zufälligen Anteile prinzipiell nicht deterministisch korrigierbar sind, lassen sich quasistationäre Fehler im Allgemeinen bei gegebener Beobachtbarkeit korrigieren. Nicht korrigierbare signifikante Fehler lassen sich bei gegebener Erkennbarkeit üblicherweise zumindest vermeiden.

Im Stand der Technik sind in diesem Zusammenhang bereits Sensorfusionsverfahren bekannt, welche üblicherweise auch dazu geeignet sind, Messdaten von unterschiedlichen Sensoren bzw. Sensorsystemen zu korrigieren bzw. zu filtern. Insbesondere im Automotive-Bereich sind dabei besondere Anforderungen zu berücksichtigen, da eine Vielzahl von unterschiedlichen Sensoren eine gemeinsame Umfeldsituation bzw. einen Kraftfahrzeugzustand mittels unterschiedlicher Messprinzipien erfasst und diese Umfeldsituation bzw. diesen Kraftfahrzeugzustand mittels einer Vielzahl unterschiedlicher Messdaten beschreibt. Für eine im Automotive-Bereich anwendbare Sensorfusion ist somit eine möglichst große Robustheit gegen zufällige Störungen sowie eine Erkennung und Kompensation von systematischen Fehlern gefordert. Ebenso sind zeitliche Einflüsse auf die Messdaten zu korrigieren und temporäre Ausfälle oder die Nichtverfügbarkeit von Sensoren zu überbrücken.

Die DE 10 2012 216 211 A1 beschreibt ein Verfahren zum Auswählen eines Satelliten, wobei der Satellit ein Satellit eines globalen Navigationssystems ist. Bevor ein derartiger Satellit dabei zur Positionsbestimmung bzw. eines Fahrzeugs herangezogen wird, werden die empfangenen GNSS-Signale auf unterschiedliche Arten plausibilisiert. Für diese Verifizierung werden jeweils unterschiedliche Redundanzen bzw. bekannte Zusammenhänge ausgenutzt. So offenbart die DE 10 2012 216 211 A1 etwa, aus dem Signal eines Satelliten sowohl den Abstand des Fahrzeugs zum Satelliten als auch die Relativgeschwindigkeit des Fahrzeugs zum Satelliten zu bestimmen. Der Abstand kann dabei mittels der Laufzeit des Signals bestimmt werden, während die Relativgeschwindigkeit mittels einer Phasenmessung des Signals bestimmt werden kann. Da der Abstand und die Relativgeschwindigkeit voneinander abhängen, können sie gegeneinander verifiziert werden. Weiterhin kann eine Verifizierung der aus dem Signal bestimmten Werte gegen bekannte Randbedingungen erfolgen, da ein Fahrzeug sich üblicherweise innerhalb eines bestimmten Geschwindigkeitsrahmens fortbewegt. Ebenso wird beschrieben, dass bei Empfang mehrerer Signale von unterschiedlichen Satelliten die Abstände zu mehreren Satelliten bestimmt werden und diese Abstände gleichzeitig mittels trigonometrischer Zusammenhänge und dem bekannten Abstand der Satelliten gegeneinander verifiziert werden. Schließlich ist auch eine Verifizierung des aus dem Signal bestimmten Abstands bzw. der aus dem Signal bestimmten Geschwindigkeit mittels anderer Sensoren, welche ebenfalls eine Positionsbestimmung bzw. Geschwindigkeitsbestimmung zulassen, möglich. Sofern die Signale eines Satelliten nicht verifiziert werden können, wird dieser Satellit nicht zur Positionsbestimmung bzw. zur Geschwindigkeitsbestimmung herangezogen.

Aus der DE 10 2010 063 984 A1 ist ein mehrere Sensorelemente umfassendes Sensorsystem bekannt. Die Sensorelemente sind so ausgebildet, dass sie zumindest teilweise unterschiedliche primäre Messgrößen erfassen und zumindest teilweise unterschiedliche Messprinzipien nutzen. Aus der primären Messgröße der Sensorelemente werden dann zumindest teilweise weitere Messgrößen abgeleitet. Weiterhin umfasst das Sensorsystem eine Signalverarbeitungseinrichtung, eine Schnittstelleneinrichtung sowie mehrere Funktionseinrichtungen. Die Sensorelemente sowie sämtliche Funktionseinrichtungen sind dabei mit der Signalverarbeitungseinrichtung verbunden. Die primären Messgrößen liefern also redundante Informationen, die in der Signalverarbeitungseinrichtung miteinander verglichen werden bzw. sich gegenseitig stützen können. Aus dem Vergleich der auf verschiedenem Weg berechneten Observablen können Rückschlüsse auf die Zuverlässigkeit und Genauigkeit der Observablen gezogen werden. Die Signalverarbeitungseinrichtung qualifiziert die Genauigkeit der Observablen und stellt die Observablen zusammen mit einer Genauigkeitsangabe über eine Schnittstelleneinrichtung verschiedenen Funktionseinrichtungen zur Verfügung.

Die DE 10 2012 219 478 A1 offenbart ein Sensorsystem zur eigenständigen Bewertung der Integrität seiner Daten. Das Sensorsystem wird bevorzugt in Kraftfahrzeugen verwendet und umfasst mehrere Sensorelemente, die derart ausgebildet sind, dass sie zumindest teilweise unterschiedliche primäre Messgrößen erfassen bzw. zumindest teilweise unterschiedliche Messprinzipien nutzen. Das Sensorsystem umfasst weiterhin eine Signalverarbeitungseinrichtung, welche die Sensorsignale zumindest teilweise gemeinsam auswertet und gleichzeitig die Informationsqualität der Sensorsignale bewertet. Die Signalverarbeitungseinrichtung stellt außerdem eine Information über die Widerspruchsfreiheit zumindest eines Datums einer physikalischen Größe bereit, wobei das Datum der physikalischen Größe auf Basis der Sensorsignale von Sensorelementen berechnet wird, welche die physikalische Größe entweder direkt erfassen oder aus deren Sensorsignalen die physikalische Größe berechenbar ist. Die Information über die Widerspruchsfreiheit des Datums wird nun auf Basis von direkt oder indirekt redundant vorliegenden Sensorinformationen berechnet.

Die Druckschrift WO 02/086533 A2 betrifft ein System, das einen GPS-Empfänger und ein Trägheitsnavigationssystem (IGS) integriert, um eine Rückkopplung zwischen den GPS- und IGS-Komponenten bereitzustellen.

Die Druckschrift DE 10 2012 216215 A1 betrifft ein Sensorsystem für ein Kraftfahrzeug.

Die EP 2378248 A1 betrifft ein Trägheitsnavigationssystem mit einer primären Trägheitsnavigationssystem(INS)-Einheit, die dafür konfiguriert ist, Beschleunigungsmessermessungen von einem Beschleunigungsmesser und Winkelgeschwindigkeitsmessungen von einem Gyroskop zu empfangen. Die primäre INS-Einheit ist ferner dazu konfiguriert, Signale eines globalen Navigationssatellitensystems (GNSS) von einem GNSS-Sensor zu empfangen und einen ersten Satz kinematischer Zustandsvektoren basierend auf den Beschleunigungsmessermessungen, den Winkelgeschwindigkeitsmessungen und den GNSS-Signalen zu bestimmen. Das INS umfasst ferner eine sekundäre INS-Einheit, die dazu konfiguriert ist, die Beschleunigungsmessermessungen und die Winkelgeschwindigkeitsmessungen zu empfangen und einen zweiten Satz von kinematischen Zustandsvektoren des Fahrzeugs basierend auf den Beschleunigungsmessermessungen und den Winkelgeschwindigkeitsmessungen zu bestimmen. Ein Gesundheitsmanagementsystem ist dazu konfiguriert, den ersten Satz von kinematischen Zustandsvektoren und den zweiten Satz von kinematischen Zustandsvektoren zu vergleichen, um basierend auf dem Vergleich Fehler zu bestimmen, die dem Beschleunigungsmesser oder dem Gyroskop zugeordnet sind.

Die im Stand der Technik bekannten, gattungsgemäßen Verfahren und Sensorsysteme sind jedoch insofern nachteilbehaftet, als dass der umgebungsabhängigen bzw. situationsabhängigen Verfügbarkeit der Korrekturmessungen nicht Rechnung getragen wird. Sogar der Totalausfall bestimmter Systeme bleibt oftmals unberücksichtigt. Dies führt zu nicht-optimalen Ergebnissen der fusionierten und korrigierten Daten.

Die Druckschrift WO 02/086533 A2 betrifft ein System, das einen GPS-Empfänger und ein Trägheitsnavigationssystem (IGS) integriert, um eine Rückkopplung zwischen den GPS- und IGS-Komponenten bereitzustellen.

Die Druckschrift DE 10 2012 216215 A1 betrifft ein Sensorsystem für ein Kraftfahrzeu.

Aus der Druckschrift US 2005/251328 A1 ist ein Navigationssystem mit einem Sigma-Point Kalmanfilter zur nichtlinearen Schätzung und Sensorfusion bekannt. Das Sensorsystem enthält ein Inertialsystem (IMU) und ein globales Positionierungssystem (GPS), die jeweils Messwerte (Observation data) liefern, um mit Hilfe eines wahrscheinlichkeitsbasierten Verfahrens, eine genaue Navigation durchzuführen. Hierbei werden ebenfalls Mittelwerte und Kovarianzwerte der Messwerte zur Gewichtung genutzt, um die wahren Navigationswerte zu bestimmen (d.h. abzuschätzen inklusive deren Streuung). In dem wahrscheinlichkeitsbasierten Verfahren wird zwar ein Messrauschen berücksichtigt, jedoch werden die (Rausch)-Parameter nicht zur Berücksichtigung (Steuerung) der Erfassungsunsicherheiten der Messgrößen verwendet. Eine explizite Aufteilung der Sensorsysteme in Basis- und weitere Sensorsysteme geht aus der Druckschrift US 2005/251328 A1 nicht hervor.

Es ist daher eine Aufgabe der Erfindung, ein verbessertes Verfahren zur Korrektur von Navigationsdaten vorzuschlagen. Diese Aufgabe wird erfindungsgemäß durch das Verfahren zur Anpassung eines Navigationssystems gemäß Anspruch 1 gelöst.

Die Erfindung betrifft ein Verfahren zur Anpassung eines Navigationssystems gemäß Anspruch 1.

Daraus ergibt sich der Vorteil, dass eine weitestgehend optimal an die jeweilige Erfassungsunsicherheit des mindestens einen Korrektursystems angepasste Gewichtung in Form einer Anpassung der Parameter des stochastischen Rauschmodells ermöglicht wird. Dies wiederum ermöglicht eine verbesserte und zuverlässige Erkennung der Fehlerwerte der Messwerte des Basissystems und damit insgesamt eine Verbesserung der Zuverlässigkeit der Messwerte des Basissystems.

Eine Anpassung nach Maßgabe einer Kennlinie oder eines Kennfelds ermöglicht dabei eine vergleichsweise einfache, nichtsdestotrotz aber zuverlässige Vorgehensweise.

Die Erfassungsunsicherheit beschreibt erfindungsgemäß bevorzugt ein sog. Rauschen der Messwerte des mindestens einen Korrektursystems. Das Rauschen prägt üblicherweise die Genauigkeit bzw. die Zuverlässigkeit von erfassten Messwerten. Vom Rauschen der Messwerte zu unterscheiden ist das Rauschen der Systemzustände, welches hier nicht näher betrachtet werden soll.

Das stochastische Rauschmodell ist auch als sog. Rauschmatrix bekannt, wobei die Rauschmatrix bevorzugt als Algorithmus in einem Fusionsfilter ausgeführt ist.

Bevorzugt erfolgt im Rahmen einer Vorverarbeitung der Messwerte durch das mindestens eine Korrektursystem bevorzugt eine Fehlerabhängigkeitsrechnung, insbesondere eine gaußssche Fehlerabhängigkeitsrechnung. Dies erlaubt bereits eine Eigenbewertung bzw. eine Erkennung der Erfassungsunsicherheit.

Beispielsweise kann zwischen drei Zuständen bzw. Erfassungsunsicherheiten für das mindestens eine Korrektursystem unterschieden werden. Wenn das mindestens eine Korrektursystem uneingeschränkt verfügbar ist, so ist die Erfassungsunsicherheit im üblichen Rahmen und das Navigationssystem ist ohne weitere Anpassung weitestgehend optimal funktionsfähig. Wenn das mindestens eine Korrektursystem hingegen nur eingeschränkt verfügbar ist, so werden die Parameter - und somit das Navigationssystem - an diese nur teilweise Verfügbarkeit entsprechend angepasst. Der Begriff Verfügbarkeit bzw. verfügbar beschreibt im Sinne der Erfindung die Funktionsfähigkeit des Korrektursystems bzw. des Navigationssystems in Abhängigkeit der Erfassungsunsicherheit. Eine eingeschränkte Verfügbarkeit deckt dabei die gesamte mögliche Bandbreite an Verfügbarkeitsstufen zwischen nicht verfügbar und voll verfügbar ab. Es ist daher bevorzugt, dass die unterschiedlichen Stufen der teilweisen Verfügbarkeit unterschieden werden und entsprechend eine Anpassung der Parameter erfolgt. Beispielsweise kann bei Vorliegen von nur eingeschränkter Verfügbarkeit im Falle von eng gekoppelten Sensoren, also bei sog. tightly coupling, in diesem Fall oftmals noch für eine geraume Zeitspanne mit unveränderten Parametern weitergearbeitet werden, da die enge Kopplung noch für einige Zeit eine Korrektur der Messwerte des mindestens einen Korrektursystems im Rahmen der Vorverarbeitung erlaubt. Der dritte mögliche Zustand liegt vor, wenn das mindestens ein Korrektursystem nicht verfügbar ist. In diesem Fall werden die Messwerte bevorzugt bereits im Rahmen der Vorverarbeitung verworfen.

Bevorzugt ist es vorgesehen, dass zusätzlich eine Korrektur zumindest der Fehlerwerte der Messwerte des Basissystems mittels der Messwerte des mindestens einen Korrektursystems erfolgt, wobei die Korrektur unter Berücksichtigung der Erfassungsunsicherheit des mindestens einen Korrektursystems erfolgt. Daraus ergibt sich der Vorteil, dass der Erkennung der Fehlerwerte eine konkrete Bedeutung zukommt, nämlich nachfolgend die Korrektur zumindest der Fehlerwerte der Messwerte des Basissystems. Dies verbessert und präzisiert die vom Navigationssystem bestimmten Navigationsinformationen wie z.B. eine Position oder eine Geschwindigkeit. Insbesondere werden auch die Fehlerwerte der Messwerte des mindestens einen Korrektursystems erkannt und korrigiert, wobei die Fehlerwerte der Messwerte des mindestens einen Korrektursystems besonders bevorzugt mittels der Messwerte des Basissystems bzw. der Messwerte eines weiteren Korrektursystems erkannt und korrigiert werden. Ebenso ist aber auch ein Erkennen und Korrigieren der Fehlerwerte eines geeigneten stochastischen Modells möglich und bevorzugt, wobei das Modell den individuellen Eigenschaften des jeweiligen Sensorsystems Rechnung trägt.

Weiterhin ist es, dass das Basissystem ein Trägheitsnavigationssystem ist und das mindestens eine Korrektursystem ein globales Satellitennavigationssystem ist. Damit ist die vorliegende Erfindung zu Navigationszwecken und für Navigationssysteme, bevorzugt in Kraftfahrzeugen, besonders gut geeignet. Das Navigationssystem bestimmt somit u.a. also die Position, insbesondere die Position eines Kraftfahrzeugs, aus den Messwerten. Bei dem globalen Satellitennavigationssystem kann es sich beispielsweise um ein sog. GPS-Navigationssystem handeln. Besonders zweckmäßig ist es, dass das Satellitennavigationssystem mindestens zwei Satellitensignalempfänger umfasst. Dadurch verbessert sie die Qualität der erfassten Satellitensignale und somit die Zuverlässigkeit und Genauigkeit des Satellitennavigationssystems. Das Trägheitsnavigationssystem als Basissystem bietet den Vorteil, dass es die vergleichsweise höchste Verfügbarkeit aufweist, da es eine vergleichsweise hohe Ausgaberate der erfassten Messwerte aufweist und zudem weitgehend unabhängig von äußeren Störeinflüssen arbeitet.

Zusätzlich ist es, dass das Navigationssystem außerdem ein Odometrienavigationssystem als Korrektursystem umfasst. Das Odometrienavigationssystem bestimmt dabei zunächst die Geschwindigkeit z.B. über den bekannten Abrollumfang der Kraftfahrzeugreifen und ermöglicht somit eine Positionsbestimmung unter Berücksichtigung des Lenkwinkels im Rahmen einer Koppelnavigation. Dies verbessert insgesamt die Genauigkeit und Zuverlässigkeit des Navigationssystems.

Es ist vorgesehen, dass die Kennlinie oder das Kennfeld mittels einer theoretischen Modellierung oder mittels einer Messreihe bestimmt werden. Die theoretische Modellierung kann dabei z.B. für das globale Satellitennavigationssystem die aus den Konstellationsdaten errechenbaren Elevationswinkel der Navigationssatelliten, z.B. der GPS-Satelliten, sowie das vom jeweiligen Elevationswinkel abhängige Signal-Rausch-Verhältnis, das sog. SNR, beschreiben. Ebenso ist es erfindungsgemäß aber auch möglich, diesen Zusammenhang im Rahmen einer Messreihe bzw. Versuchsreihe zu bestimmen. Mittels der Kennlinie bzw. des Kennfelds wird somit stets auf einfache Weise die zu erwartende SNR bzw. die zu erwartende Erfassungsunsicherheit im Sinne eines Messrauschens bereitgestellt. Selbstverständlich ist die Erfindung nicht auf das Bereitstellen der SNR eines Satellitennavigationssystems in Abhängigkeit des Elevationswinkels beschränkt. Mittels weiterer Kennlinien bzw. Kennfelder bzw. der Kombination mehrerer Kennlinien zu einem entsprechenden Kennfeld können auch weitere Einflüsse, wie etwa Häuserschluchten, Tunnelfahrten etc. auf das Messrauschen bzw. die SNR bzw. die Erfassungsunsicherheit berücksichtigt werden. Weiterhin kann auch natürlich auch die Erfassungsunsicherheit bzw. das Messrauschen bzw. das SNR eines Odometrienavigationssystem in Form einer Kennlinie bzw. eines Kennfelds dargestellt werden. Die Erfassungsunsicherheit bzw. das Messrauschen bzw. das SNR eines Odometrienavigationssystem kann dabei z.B. in Abhängigkeit des Fahrbahnbelags, z.B. Asphalt oder Schotter, der Temperatur bzw. der Feuchte dargestellt werden.

Besonders zweckmäßig ist es, dass die Erfassungsunsicherheit durch einen Ionosphäreneinfluss und/oder eine elektromagnetische Störung und/oder elektromagnetische Brechungseffekte und/oder elektromagnetische Beugungseffekte und/oder elektromagnetische Reflektionseffekte im Signalausbreitungsweg von Signalen des globalen Satellitennavigationssystems geprägt ist. Dies sind die typischen Rauscheinflüsse, welche die Erfassungsunsicherheit üblicherweise prägen. Durch ihre Berücksichtigung kann somit einer Vielzahl von die Erfassungsunsicherheit prägenden Rauscheinflüssen Rechnung getragen werden.

Außerdem ist es bevorzugt, dass die Erfassungsunsicherheit mittels Umfeldsensorik bestimmt wird. Mittels Umfeldsensorik lassen sich viele, die Erfassungsunsicherheit prägende Einflüsse, vergleichsweise einfach bestimmen. Z.B. kann mittels eines Kamerasensors eine Häuserschlucht oder ein Tunnel erkannt werden. Ebenso kann mittels eines Kamerasensors auch ein Fahrbahnbelag erkannt werden. Auch ein Temperatursensor und ein Regensensor können die Erfassungsunsicherheit prägende Einflüsse erkennen, wobei z.B. Regen sowohl die Erfassungsunsicherheit eines Satellitennavigationssystems als auch die Erfassungsunsicherheit eines Odometrienavigationssystems prägen kann.

Des Weiteren ist es bevorzugt, dass die Erfassungsunsicherheit des mindestens einen Korrektursystems mittels einer digitalen Karte bestimmt wird. Mittels einer digitalen Karte lassen sich z.B. Häuserschluchten, Tunnelfahrten und Fahrbahnbeläge bestimmen, zumindest sofern diese in der digitalen Karte hinterlegt sind. Mittels einer Positionsbestimmung des Fahrzeugs bzw. des Navigationssystems kann somit bereits eine Vielzahl an die Erfassungsunsicherheit prägende Einflüssen auf einfache Weise bestimmt werden.

Weiterhin ist es vorgesehen, dass die Messwerte zu einem gemeinsamen Fusionsdatensatz fusioniert werden. Ein gemeinsamer Fusionsdatensatz ist gegenüber den einzelnen Messwerten in der Regel zuverlässiger und präziser und insbesondere erlaubt er mittels einer Fehlerschätzung eine vergleichsweise zuverlässige Bewertung der Genauigkeit bzw. Zuverlässigkeit der fusionierten Messwerte bzw. Navigationsdaten.

Bevorzugt ist es vorgesehen, dass für die Erstellung des gemeinsamen Fusionsdatensatzes nur Messwerte mit einem identischen Zeitstempel herangezogen werden. Die Messwerte beschreiben also dieselbe physikalische Größe zum selben Zeitpunkt. Somit sind die herangezogenen Messwerte idealerweise identisch bzw. müssen es idealerweise sein. Daraus ergibt sich der Vorteil, dass Fehlerwerte der Messwerte besser und zuverlässiger identifizierbar sind. Somit verbessert sich auch die Genauigkeit bzw. Zuverlässigkeit des Fusionsdatensatzes.

Es ist zweckmäßig, dass die Erkennung und/oder die Korrektur mittels eines Error-State-Space-Filters, insbesondere mittels eines Error-State-Space-Kalman-Filters, erfolgen. Das Error-State-Space-Filter stellt dabei ein Fusionsfilter zur Fusion der Messwerte dar, insbesondere zur Fusion von normalverteilten Messwerten. Gleichzeitig schätzt bzw. bestimmt das Error-State-Space-Filter bevorzugt die Fehlerwerte zumindest des Basissystems. Mittels des mindestens einen Korrektursystems können dann die Fehlerwerte und ggf. auch unbekannte Größen des Trägheitsnavigationssystems geschätzt bzw. bestimmt werden.

Eine Besonderheit des Error-State-Space-Filters ist es also, dass anstelle der Sensorsignale bzw. der Messwerte lediglich Fehlerwerte inkrementell geschätzt bzw. bestimmt werden und anschließend korrigiert werden. Die Fehlerwerte haben nämlich eine signifikant niedrigere zeitliche Dynamik als die Messwerte selbst, wodurch eine weitgehende Entkopplung der Dynamik des Error-State-Space-Filters von den Eigenschaften des Basissystems bzw. des mindestens einen Korrektursystems erreicht wird.

Die Erfindung betrifft weiterhin ein System zur Anpassung eines Navigationssystems gemäß Anspruch 9.

Bevorzugt ist es vorgesehen, dass das System dazu ausgebildet ist, das erfindungsgemäße Verfahren auszuführen. Dies führt zu den bereits beschriebenen Vorteilen.

Außerdem betrifft die Erfindung eine Verwendung des erfindungsgemäßen Systems in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: beispielhaft eine mögliche Ausbildungsform eines erfindungsgemäßen Systems, welches zur Positionsbestimmung ausgebildet ist, in einem Kraftfahrzeug und
- Fig. 2: beispielhaft eine weitere mögliche Ausbildungsform eines erfindungsgemäßen Systems, welches ebenfalls zur Positionsbestimmung ausgebildet ist, in einem Kraftfahrzeug.

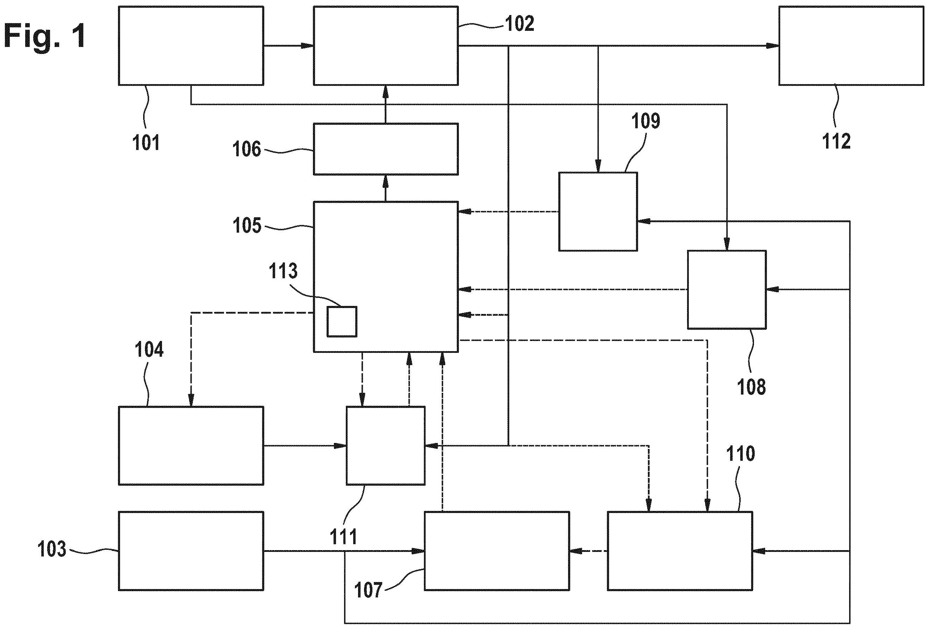

Fig. 1 zeigt in schematischer Darstellung ein Ausführungsbeispiel des erfindungsgemäßen Systems, das zur Anordnung und Verwendung in einem Kraftfahrzeug (nicht dargestellt) vorgesehen ist. Dabei sind alle vom System umfassten Elemente bzw. Bestandteile bzw. das Basissystem bzw. die Korrektursysteme als Funktionsblöcke veranschaulicht und deren Zusammenwirken untereinander dargestellt.

Das Navigationssystem umfasst Trägheitsnavigationssystem 101, das so ausgebildet ist, dass es zumindest die Beschleunigungen entlang einer ersten, einer zweiten und einer dritten Achse sowie wenigstens die Drehraten um die erste, um die zweite und um die dritte Achse erfassen kann. Die erste Achse entspricht dabei beispielsgemäß der Längsachse des Kraftfahrzeugs, die zweite Achse entspricht der Querachse des Kraftfahrzeugs und die dritte Achse entspricht der Hochachse des Kraftfahrzeugs. Diese drei Achsen bilden ein kartesisches Koordinatensystem, das sog. Kraftfahrzeugkoordinatensystem.

Trägheitsnavigationssystem 101 bildet beispielsgemäß das sog. Basissystem, dessen Messwerte mittels der im Folgenden beschriebenen sog. Korrektursysteme korrigiert werden. Die Korrektursysteme sind dabei Odometrienavigationssystem 103 und Satellitennavigationssystems 104.

Das erfindungsgemäße System weist weiterhin eine sog. Strapdown-Algorithmus-Einheit 102 auf, in welcher ein sog. Strapdown-Algorithmus durchgeführt wird, mittels dessen die Messwerte von Trägheitsnavigationssystem 101 u.a. in Positionsdaten umgerechnet werden. Dazu werden die Messwerte von Trägheitsnavigationssystem 101, welche naturgemäß Beschleunigungen beschreiben, zweimal über die Zeit integriert. Mittels einer Einfachintegration über die Zeit werden weiterhin die Ausrichtung und die Geschwindigkeit des Kraftfahrzeugs bestimmt. Außerdem kompensiert Strapdown-Algorithmus-Einheit 102 eine auf Trägheitsnavigationssystem 101 wirkende Corioliskraft.

Die Ausgangsdaten von Strapdown-Algorithmus-Einheit 102 umfassen folglich die folgenden physikalischen Größen:
die Geschwindigkeit, die Beschleunigung sowie die Drehrate des Kraftfahrzeugs, beispielsgemäß bezüglich der genannten drei Achsen des Kraftfahrzeugkoordinatensystems und beispielsgemäß zusätzlich jeweils bezogen auf ein Weltkoordinatensystem, das zur Beschreibung der Ausrichtung bzw. von dynamischen Größen des Kraftfahrzeugs auf der Welt geeignet ist. Beispielsgemäß handelt es sich bei dem genannten Weltkoordinatensystem um ein GPS-Koordinatensystem. Außerdem umfassen die Ausgangsdaten von Strapdown-Algorithmus-Einheit 102 die Position bezüglich des Kraftfahrzeugkoordinatensystems und die Ausrichtung hinsichtlich des Weltkoordinatensystems. Zusätzlich weisen die Ausgangsdaten von Strapdown-Algorithmus-Einheit 102 die Varianzen als Information über die Datenqualität der oben genannten Navigationsdaten auf. Diese Varianzen werden beispielgemäß nicht in Strapdown-Algorithmus-Einheit 102 berechnet, sondern nur von dieser verwendet und weitergeleitet. Die von Strapdown-Algorithmus-Einheit 102 berechneten o.g. Navigationsdaten werden über Ausgabemodul 112 ausgegeben und anderen Kraftfahrzeugsystemen zur Verfügung gestellt.

Das Navigationssystem umfasst außerdem Odometrienavigationssystem 103 in Form von Raddrehzahlsensoren für jedes Rad des Kraftahrzeugs. Beispielgemäß handelt es sich um ein vierrädriges Kraftfahrzeug mit vier Raddrehzahlsensoren, die jeweils die Drehzahl des ihnen zugeordneten Rads sowie dessen Drehrichtung erfassen. Weiterhin umfasst Odometrienavigationssystem 103 ein Lenkwinkelsensorelement, das den Lenkwinkel des Kraftfahrzeugs erfasst.

Darüber hinaus weist das beispielhaft dargestellte Navigationssystem Satellitennavigationssystem 104 auf, welches so ausgebildet ist, dass es die Entfernung jeweils zwischen einem zugeordneten Satelliten und dem Kraftahrzeug sowie die Geschwindigkeit jeweils zwischen dem zugeordneten Satelliten und dem Kraftfahrzeug bestimmt.

Das System umfasst außerdem Fusionsfilter 105. Fusionsfilter 105 stellt im Zuge der gemeinsamen Auswertung der Messdaten von Odometrienavigationssystem 103, von Satellitennavigationssystems 104 und von Trägheitsnavigationssystem 101 einen Fusionsdatensatz 106 bereit. Fusionsdatensatz 106 weist die erfassten Messdaten der unterschiedlichen Sensorsysteme auf, wobei Fusionsdatensatz 106 beispielsgemäß zusätzlich Fehlerwerte und den Fehlerwerten zugeordnete Varianzen, welche die Datenqualität beschreiben, umfasst.

Die Messwerte von Trägheitsnavigationssystem 101 werden während des Betriebs des Kraftfahrzeugs in einem hierfür vorgesehenen elektronischen Datenspeicher 113 von Fusionsfilter 105 für einen vorgegebenen Zeitraum gespeichert. Trägheitsnavigationssystems 101 stellt dabei das sog. Basissystem dar, während Odometrienavigationssystem 103 und Satellitennavigationssystem 104 die sog. Korrektursysteme darstellen, deren Messwerte zur Korrektur der Messwerte des Basissystems herangezogen werden. Somit ist sichergestellt, dass stets Werte, die zumindest scheinbar zu einem identischen Zeitpunkt erfasst wurden, dem Vergleich unterworfen werden können.

Von Fusionsfilter 105 bereitgestellter Fusionsdatensatz 106 umfasst beispielsgemäß die mittels der plausibilisierten Messwerte der Korrektursysteme bestimmten quantitativen Fehler des Basissystems.

Strapdown-Algorithmus-Einheit 102 korrigiert nun mittels Fusionsdatensatz 106 die Messwerte des Basissystems.

Fusionsdatensatz 106 wird von Fusionsfilter 105 aus den Messwerten von Odometrienavigationssystem 103, Satellitennavigationssystems 104 und Trägheitsnavigationssystem 101 berechnet.

Fusionsfilter 105 ist beispielsgemäß als Error-State-Space-Kalman Filter ausgebildet ist, also als Kalman-Filter, das insbesondere eine Linearisierung der Messwerte ausführt und in welchem die quantitativen Fehlerwerte der Messwerte berechnet bzw. geschätzt werden und welches sequentiell arbeitet und dabei die in dem jeweiligen Funktionsschritt der Sequenz verfügbaren Messwerte korrigiert.

Fusionsfilter 105 ist so ausgebildet, dass es stets asynchron die aktuellsten von Trägheitsnavigationssystem 101, Odometrienavigationssystem 103 und Satellitennavigationssystem 104 verfügbaren Messwerte erfasst. Beispielsgemäß werden die Messwerte dabei über Kraftfahrzeugmodelleinheit 107 und Ausrichtungsmodelleinheit 109 geführt.

Kraftfahrzeugmodelleinheit 107 ist so ausgebildet, dass sie aus den Messwerten von Odometrienavigationssystem 103 zumindest die Geschwindigkeit entlang einer ersten Achse, die Geschwindigkeit entlang einer zweiten Achse sowie die Drehrate um eine dritte Achse berechnet und diese Fusionsfilter 105 bereitstellt.

Das beispielsgemäße System umfasst außerdem Reifenparameterschätzungseinheit 110, welche so ausgebildet ist, dass sie zumindest den Halbmesser, beispielgemäß den dynamischen Halbmesser, aller Räder berechnet und zusätzlich die Schräglaufsteifigkeit und die Schlupfsteifigkeit aller Räder berechnet und diese Kraftfahrzeugmodelleinheit 107 als zusätzliche Eingangsgrößen bereitstellt. Reifenparameterschätzungseinheit 110 ist weiterhin so ausgebildet, dass sie ein im Wesentlichen lineares Reifenmodell zur Berechnung der Reifengrößen verwendet.

Die beispielgemäßen Eingangsgrößen von Reifenparameterschätzungseinheit 110 sind dabei die Raddrehzahlen und den Lenkwinkel beschreibende Messwerte, zumindest teilweise die Ausgangswerte von Strapdown-Algorithmus-Einheit 102 sowie die von Fusionsfilter 105 bestimmten Varianzen.

Das beispielsgemäße System umfasst außerdem GPS-Fehlererkennungs-und-Plausibilisierungseinheit 111, welche so ausgebildet ist, dass sie beispielsgemäß als Eingangsdaten die Messwerte von Satellitennavigationssystem 104 sowie zumindest teilweise Messwerte von Strapdown-Algorithmus-Einheit 102 erhält und in ihren Berechnungen berücksichtigt. GPS-Fehlererkennungs-und-Plausibilisierungseinheit 111 prüft die Messwerte gegen ein an Satellitennavigationssystem 104 angepasstes stochastisches Modell. Sofern die Messwerte im Rahmen einer dem Rauschen Rechnung tragenden Toleranz dem Modell entsprechen, werden sie plausibilisiert.

Dabei ist GPS-Fehlererkennungs-und-Plausibilisierungseinheit 111 zusätzlich mit Fusionsfilter 105 auf Datenebene verbunden und übermittelt die plausibilisierten Messwerte an Fusionsfilter 105.

GPS-Fehlererkennungs-und-Plausibilisierungseinheit 111 ist beispielhaft so ausgebildet, dass sie ein Verfahren zum Auswählen eines Satelliten u.a. mittels der folgenden Verfahrensschritte durchführt:
- Messen von Positionsdaten des Kraftfahrzeugs gegenüber dem Satelliten basierend auf den Sensorsignalen von Satellitennavigationssystems 104,
- Bestimmen von zu den basierend auf den Sensorsignalen von Satellitennavigationssystems 104 bestimmten Positionsdaten redundanten Referenzpositionsdaten des Kraftfahrzeugs,
- Auswählen des Satelliten, wenn eine Gegenüberstellung der Positionsdaten und der Referenzpositionsdaten einer vorbestimmten Bedingung genügt,
- wobei zur Gegenüberstellung der Positionsdaten und der Referenzpositionsdaten eine Differenz zwischen den Positionsdaten und den Referenzpositionsdaten gebildet wird,
- wobei die vorbestimmte Bedingung eine maximal zulässige Abweichung der Positionsdaten von den Referenzpositionsdaten ist,
- wobei die maximal zulässige Abweichung von einer Standardabweichung abhängig ist, die basierend auf einer Summe aus einer Referenzvarianz für die Referenzpositionsdaten und einer Messvarianz für die Positionsdaten berechnet wird und
- wobei die maximal zulässige Abweichung einem Vielfachen der Standardabweichung derart entspricht, dass eine Wahrscheinlichkeit, dass die Positionsdaten in ein von der Standardabweichung abhängiges Streuintervall fallen, einen vorbestimmten Schwellwert unterschreitet.

Das beispielsgemäße System weist außerdem Stillstandserkennungseinheit 108 auf, welche so ausgebildet ist, dass sie einen Stillstand des Kraftfahrzeugs erkennen kann und im Falle eines erkannten Stillstands des Kraftfahrzeugs zumindest Fusionsfilter 105 Informationen aus einem Stillstandsmodell bereitstellt. Die Informationen aus einem Stillstandsmodell beschreiben dabei, dass die Drehraten um alle drei Achsen den Wert Null aufweisen und die Geschwindigkeiten entlang aller drei Achsen den Wert Null aufweisen. Stillstandserkennungseinheit 108 ist dabei beispielgemäß so ausgebildet, dass sie als Eingangsdaten die Messwerte der Raddrehzahlsensoren von Odometrienavigationssystem 103 sowie die Messwerte von Trägheitsnavigationssystem 101 nutzt.

Das Sensorfusionssystem verwendet beispielgemäß eine erste Gruppe von Messwerten, die sich auf ein Kraftfahrzeugkoordinatensystem beziehen und zusätzlich eine zweite Gruppe von Messwerte, die sich auf ein Weltkoordinatensystem beziehen, wobei das Weltkoordinatensystem zur Beschreibung der Ausrichtung und von dynamischen Größen des Kraftfahrzeugs verwendet wird. Mittels Ausrichtungsmodelleinheit 109 wird ein Ausrichtungswinkel zwischen dem Kraftfahrzeugkoordinatensystem und dem Weltkoordinatensystem bestimmt.

Der von Ausrichtungsmodelleinheit 109 bestimmte Ausrichtungswinkel zwischen dem Kraftfahrzeugkoordinatensystem und dem Weltkoordinatensystem wird dabei bestimmt auf Basis folgender physikalischer Größen:
der vektoriellen Geschwindigkeit bezüglich des Weltkoordinatensystems,
der vektoriellen Geschwindigkeit bezüglich des Kraftfahrzeugkoordinatensystems,
des Lenkwinkels und
der jeweiligen quantitativen Fehler der die genannten Größen beschreibenden Messdaten bzw. Werte.

Ausrichtungsmodelleinheit 109 greift dabei auf sämtliche der Ausgangsdaten von Strapdown-Algorithmus-Einheit 102 zurück.

Ausrichtungsmodelleinheit 109 ist beispielgemäß so ausgebildet, dass sie zusätzlich zu dem Ausrichtungswinkel noch eine Information über die Datenqualität des Ausrichtungswinkels in Form einer Varianz berechnet und Fusionsfilter 105 bereitstellt.

Fusionsfilter 105 verwendet den Ausrichtungswinkel und die Varianz des Ausrichtungswinkels bei seinen Berechnungen, deren Ergebnisse er über Fusionsdatensatz 106 an Strapdown-Algorithmus-Einheit 102 weiterleitet.

Fusionsfilter 105 erfasst also die Messwerte von Trägheitsnavigationssystem 101, dem Basissystem, sowie von Odometrienavigationssystem 103 und von Satellitennavigationssystem 104, den Korrektursystemen.

Das beispielsgemäße System prüft kontinuierlich die Erfassungsunsicherheit der beiden Korrektursysteme, also von Odometrienavigationssystem 103 und von Satellitennavigationssystem 104. Dazu wird ständig der Elevationswinkel der empfangbaren Navigationssatelliten bestimmt. Außerdem werden mithilfe eines Regensensors, eines Temperatursensors, eines Kamerasensors und eines Lichtsensors die Wetterverhältnisse bestimmt. Anschließend werden die Parameter des stochastischen Rauschmodells, welches die erfassten Messwerte entsprechend ihrem Messrauschen gegen die Messwerte des Basissystems gewichtet, entsprechend der erkannten Erfassungsunsicherheit, also entsprechend dem Elevationswinkel und den Wetterverhältnissen, nach Maßgabe eines Kennfeldes angepasst. Das Kennfeld ist in einem nicht dargestellten elektronischen Speicher im Fahrzeug digital abgelegt.

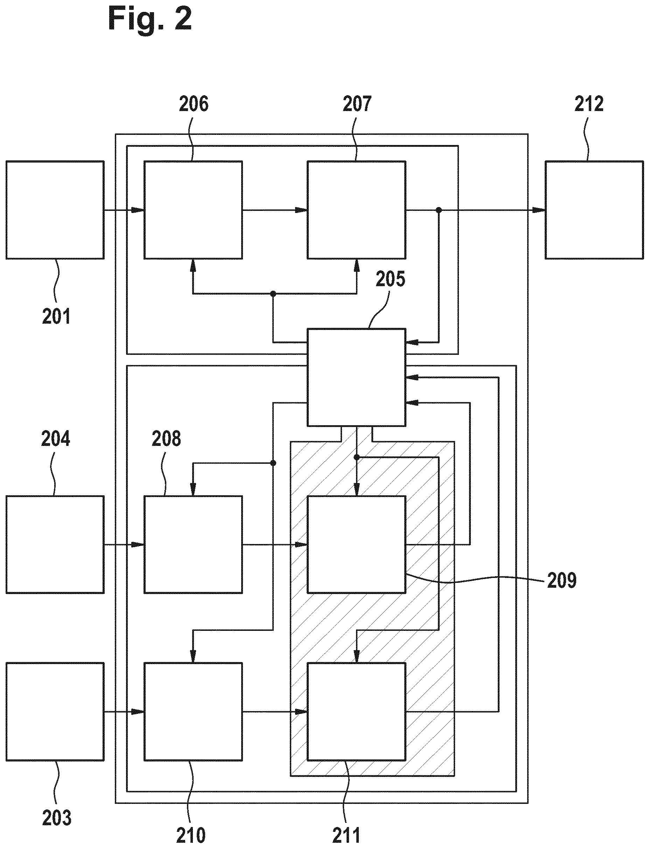

Fig. 2 zeigt beispielhaft eine weitere mögliche Ausbildungsform eines erfindungsgemäßen Systems, welches ebenfalls zur Anpassung eines Navigationssystems ausgebildet ist, in einem Kraftfahrzeug (nicht dargestellt). Das System umfasst beispielsgemäß Trägheitsnavigationssystem 201, Satellitennavigationssystem 204 und Odometrienavigationssystem 203 als unterschiedliche Sensorsysteme. Trägheitsnavigationssystem 201, Satellitennavigationssystem 204 und Odometrienavigationssystem 203 geben Messwerte, die direkt bzw. indirekt Navigationsdaten, nämlich eine Position, eine Geschwindigkeit, eine Beschleunigung, eine Ausrichtung, eine Gierrate bzw. eine Gierbeschleunigung beschreiben, an Fusionsfilter 205 aus. Die Ausgabe der Messwerte erfolgt dabei über einen Fahrzeugdatenbus, beispielsgemäß über einen sog. CAN-Bus. Beispielsgemäß gibt Satellitennavigationssystem 204 seine Messdaten in Rohdatenform an aus.

Als zentrales Element bei einer Positionsbestimmung des Kraftfahrzeugs wird Trägheitsnavigationssystem 201, bei dem es sich um eine sog. MEMS-IMU *(Micro-Electro-Mechanical-System-Inertial Measurement Unit)* handelt in Kombination mit Strapdown-Algorithmus-Einheit 207 verwendet, da dieses als fehlerfrei angenommen wird, d.h., es wird angenommen, dass die Werte von Trägheitsnavigationssystem 201 stets ihrem stochastischen Modell entsprechen, dass sie lediglich Rauscheinflüsse aufweisen und somit frei von äußeren bzw. zufälligen Fehlern bzw. Störungen sind. Das Rauschen sowie verbleibende, nicht modellierte Fehler von Trägheitsnavigationssystem 201, wie z.B. Nichtlinearität, werden dabei über den Messbereich als mittelwertfrei, stationär und normalverteilt (sog. Gaußsches Weißes Rauschen) angenommen.

Trägheitsnavigationssystem 201 umfasst drei zueinander jeweils orthogonal erfassende Drehratensensoren und drei zueinander jeweils orthogonal erfassende Beschleunigungssensoren.

Satellitennavigationssystem 204 umfasst einen GPS-Empfänger, welcher über die Satellitensignallaufzeit zunächst Entfernungsmessungen zu den empfangbaren GPS-Satelliten vornimmt und außerdem aus der Änderung der Satellitensignallaufzeit sowie zusätzlich aus der Änderung der Anzahl der Wellenlängen der Satellitensignale eine vom Kraftfahrzeug zurückgelegte Wegstrecke bestimmt. Odometrienavigationssystem 203 umfasst jeweils einen Raddrehzahlsensor an jedem Rad des Kraftfahrzeugs sowie einen Lenwinkelsensor. Die Raddrehzahlsensoren bestimmen jeweils die Raddrehgschwindigkeit des ihnen zugeordneten Rads und der Lenkwinkelsensor bestimmt den eingeschlagenen Lenkwinkel.

Trägheitsnavigationssystem 201 gibt seine Messwerte an Vorverarbeitungseinheit 206 von Trägheitsnavigationssystem 201 aus. Vorverarbeitungseinheit 206 korrigiert nun die Messwerte bzw. die darin beschriebenen Navigationsdaten mittels Korrekturwerten, die Vorverarbeitungseinheit 206 von Fusionsfilter 205 erhält. Die solcherart korrigierten Messwerte bzw. die darin beschriebenen Navigationsdaten werden weitergeführt an Strapdown-Algorithmus-Einheit 207.

Strapdown-Algorithmus-Einheit 207 nimmt anhand der korrigierten Messwerte von Vorverarbeitungseinheit 206 nun eine Positionsbestimmung vor. Diese Positionsbestimmung ist dabei eine sog. Koppelnavigation auf Basis von Trägheitsnavigationssystem 201. Dazu werden die von Vorverarbeitungseinheit 206 ausgegebenen korrigierten Messwerte bzw. die darin beschriebenen Navigationsdaten fortlaufend über die Zeit aufintegriert bzw. aufaddiert. Strapdown-Algorithmus-Einheit 207 kompensiert weiterhin eine auf Trägheitsnavigationssystem 201 wirkende Corioliskraft, welche sich auf die Messdaten von Trägheitsnavigationssystem 201 auswirken kann. Zur Positionsbestimmung führt Strapdown-Algorithmus-Einheit 207 eine zweifache Integration der von Trägheitsnavigationssystem 201 erfassten Messwerte, welche Beschleunigungen beschreiben, über die Zeit durch. Dies ermöglicht eine Fortschreibung einer zuvor bekannten Position sowie eine Fortschreibung einer zuvor bekannten Ausrichtung des Kraftfahrzeugs. Zur Bestimmung einer Geschwindigkeit bzw. einer Drehrate des Kraftfahrzeugs führt Strapdown-Algorithmus-Einheit 207 eine einfache Integration der von Trägheitsnavigationssystem 201 erfassten Messwerte über die Zeit durch. Weiterhin korrigiert Strapdown-Algorithmus-Einheit 207 auch die bestimmte Position mittels entsprechender Korrekturwerte von Fusionsfilter 205. Fusionsfilter 205 führt in diesem Beispiel die Korrektur also nur mittelbar über Strapdown-Algorithmus-Einheit 207 aus. Die von Strapdown-Algorithmus-Einheit 207 bestimmten und korrigierten Messwerte bzw. Navigationsdaten, also die Position, die Geschwindigkeit, die Beschleunigung, die Ausrichtung, die Drehrate und die Drehbeschleunigung des Kraftfahrzeugs werden nun an Ausgabemodul 212 und an Fusionsfilter 205 geführt.

Der von Strapdown-Algorithmus-Einheit 207 ausgeführte sog. Strapdown-Algorithmus ist dabei rechnerisch nur wenig komplex und lässt sich daher als echtzeitfähiges Basissystem realisieren. Er stellt einen Verfahrensablauf zur Integration der Messwerte von Trägheitsnavigationssystem 201 zu Geschwindigkeit, Ausrichtung und Position dar und beinhaltet keine Filterung, so dass sich eine annähernd konstante Latenzzeit und Gruppenlaufzeit ergibt.

Der Begriff Basissystem beschreibt dabei dasjenige Sensorsystem, dessen Messwerte mittels der Messwerte der anderen Sensorsysteme, der sog. Korrektursysteme, korrigiert werden. Beispielsgemäß handelt es sich, wie bereits ausgeführt, bei den Korrektursystemen um Odometrienavigationssystem 203 und um Satellitennavigationssystem 204.

Trägheitsnavigationssystem 201, Vorverarbeitungseinheit 206 von Trägheitsnavigationssystem 201 und Strapdown-Algorithmus-Einheit 207 bilden beispielsgemäß zusammen das sog. Basissystem, zu welchem zusätzlich anteilig auch Fusionsfilter 205 gezählt wird.

Ausgabemodul 212 gibt die von Strapdown-Algorithmus-Einheit 207 bestimmten und korrigierten Navigationsdaten an beliebige weitere Systeme des Kraftfahrzeugs weiter.

Die von Satellitennavigationssystem 204 erfassten Messwerte werden beispielsgemäß in Form von Sensorsignalen über eine sog. UART-Datenverbindung zunächst an Vorverarbeitungseinheit 208 von Satellitennavigationssystem 204 weitergeführt. Vorverarbeitungseinheit 208 bestimmt nun aus den von Satellitennavigationssystem 204 ausgegebenen Messwerten, welche GPS-Rohdaten darstellen und auch eine Beschreibung der Umlaufbahn des jeweils die GPS-Signale sendenden GPS-Satelliten umfassen, eine Position und eine Geschwindigkeit des Kraftfahrzeugs im GPS-Koordinatensystem. Außerdem bestimmt Satellitennavigationssystem 204 eine relative Geschwindigkeit des Kraftfahrzeugs zu den GPS-Satelliten, von denen GPS-Signale empfangen werden. Weiterhin korrigiert Vorverarbeitungseinheit 208 einen in den Messwerten enthaltenen Zeitfehler einer Empfängeruhr von Satellitennavigationssystem 204, welcher durch eine Drift der Empfängeruhr entsteht, sowie mittels eines Korrekturmodells die durch atmosphärische Einwirkungen auf die von den GPS-Satelliten gesendeten GPS-Signale verursachten Veränderungen in der Signallaufzeit und dem Signalweg. Die Korrektur des Zeitfehlers sowie der atmosphärischen Einwirkungen erfolgen mittels von Fusionsfilter 205 über den CAN-Bus erhalten Korrekturwerten.

Satellitennavigationssystem 204 ist weiterhin Plausibilisierungsmodul 209 zugeordnet, welches die von Vorverarbeitungseinheit 208 ausgegebenen Messwerte der Navigationsdaten, also der Position und der Geschwindigkeit des Kraftfahrzeugs, plausibilisiert. Die von Plausibilisierungsmodul 209 plausibilisierten Messwerte werden dann an Fusionsfilter 205 ausgegeben.

Das System umfasst weiterhin Vorverarbeitungseinheit 210 von Odometrienavigationssystem 203, welche über den CAN-Bus die von Odometrienavigationssystem 203 erfassten Messwerte erhält. Die erfassten Messwerte sind in diesem Fall die Messwerte der einzelnen Raddrehzahlsensoren sowie die Messwerte des Lenkwinkelsensors. Vorverarbeitungseinheit 210 bestimmt nun aus den von Odometrienavigationssystem 203 ausgegebenen Messwerten gemäß einem sog. Koppelnavigationsverfahren die Position und die Ausrichtung des Kraftfahrzeugs im Kraftfahrzeugkoordinatensystem. Weiterhin werden die Geschwindigkeit, die Beschleunigung, die Drehrate und die Drehbeschleunigung des Kraftfahrzeugs bestimmt, ebenfalls im Kraftfahrzeugkoordinatensystem. Außerdem korrigiert Vorverarbeitungseinheit 210 die von Odometrienavigationssystem 203 erhaltenen Messwerte mittels von Fusionsfilter 205 erhaltenen Korrekturwerten.

Odometrienavigationssystem 203 ist weiterhin Plausibilisierungsmodul 211 zugeordnet, welches die von Vorverarbeitungseinheit 210 ausgegebenen Messwerte, also die Position, die Ausrichtung, die Geschwindigkeit, die Beschleunigung, die Drehrate und die Drehbeschleunigung des Kraftfahrzeugs, plausibilisiert. Da die Störungen der Messwerte von Odometrienavigationssystem 203 häufig zufällige, umweltbedingte Störungen sind, die nicht Weißem Rauschen entsprechen, z.B. bei vergleichsweise großem Radschlupf, werden die mittels Trägheitsnavigationssystem 201 und mittels Satellitennavigationssystem 204 bestimmten Messwerte genutzt, um die Messwerte von Odometrienavigationssystem 203 zu plausibilisieren. Zunächst werden auch hier aber die Messwerte gegen ein ihnen zugeordnetes, sensorindividuelles Modell abgeglichen, welches Messunsicherheiten wie Rauscheinflüsse berücksichtigt. Sofern die Messwerte dem Modell innerhalb der gegebenen Grenzwerte bzw. Toleranzbereiche entsprechen, erfolgt hier eine erste Plausibilisierung und die solcherart plausibilisierten Werte werden weiterverarbeitet. Die plausibilisierten Werte werden dann an Fusionsfilter 205 weitergeführt. Sofern eine Plausibilisierung dieser Messwerte nicht erfolgen kann, werden die entsprechenden Messwerte verworfen und nicht weiter verarbeitet.

Fusionsfilter 205 ist beispielsgemäß als Error-State-Space-Kalman-Filter ausgebildet. Die Hauptaufgabe von Fusionsfilter 205 ist es beispielsgemäß, die Messwerte des Basissystems, also von Trägheitsnavigationssystem 201, mittels aus Messwerten von Odometrienavigationssystem 203 und Satellitennavigationssystem 204, welche die Korrektursysteme darstellen, zu korrigieren, bzw. entsprechende Korrekturwerte an Strapdown-Algorithmus-Einheit 207 auszugeben. Da Trägheitsnavigationssystem 201 beispielsgemäß als frei von zufälligen Fehlern und äußeren Störungen angenommen wird, unterliegen die Messwerte von Trägheitsnavigationssystem 201 ausschließlich Weißem Rauschen.

Da es sich bei Fusionsfilter 205 um einen sog. Error-State-Space-Kalman-Filter handelt, werden ausschließlich die quantitativen Fehlerwerte der Messwerte bestimmt und entsprechende Korrekturen ausgeführt. Dies vereinfacht und beschleunigt die von Fusionsfilter 205 vorgenommene Fusion der Messwerte von Trägheitsnavigationssystem 201, Odometrienavigationssystem 203 und Satellitennavigationssystem 204 zu einem gemeinsamen Fusionsdatensatz. Somit wird eine echtzeitfähige Positionsbestimmung und Korrektur der Positionsbestimmung ermöglicht.

Das in Fig. 2 dargestellte System stellt einen sog. virtuellen Sensor dar, wobei Trägheitsnavigationssystem 201, Odometrienavigationssystem 203 und Satellitennavigationssystem 204 jedoch nicht Bestandteile des virtuellen Sensors sind. Ein virtueller Sensor ist ein System, welches unabhängig von der Art der eingebundenen Sensorsysteme - hier also Trägheitsnavigationssystem 201, Odometrienavigationssystem 203 und Satellitennavigationssystem 204 - stets die gleichen Ausgangsdaten bzw. Ausgaben erzeugt. Anhand der Ausgangsdaten bzw. Ausgaben ist nicht ersichtlich, welche Sensorsysteme in das System eingebunden sind.

Auch das in Fig. 2 beispielsgemäß dargestellte System prüft kontinuierlich die Erfassungsunsicherheit der beiden Korrektursysteme, also von Odometrienavigationssystem 203 und von Satellitennavigationssystem 204. Dazu wird einerseits ständig der Elevationswinkel der empfangbaren Navigationssatelliten bestimmt. Außerdem werden mithilfe eines Regensensors, eines Temperatursensors, eines Kamerasensors und eines Lichtsensors die Wetterverhältnisse bestimmt. Weiterhin werden mittels des Kamerasensors und mittels einer digitalen Karte im Fahrzeug die Umgebungsverhältnisse bestimmt. Alle diese Faktoren prägen die Erfassungsunsicherheit von Satellitennavigationssystem 204. Anschließend werden die Parameter des stochastischen Rauschmodells, welches die erfassten Messwerte entsprechend ihrem Messrauschen gegen die Messwerte des Basissystems gewichtet, entsprechend der erkannten Erfassungsunsicherheit, also entsprechend dem Elevationswinkel und den Wetterverhältnissen, nach Maßgabe eines Kennfeldes angepasst. Das Kennfeld ordnet dabei der jeweils spezifischen Kombination aus Elevationswinkel, Wetterverhältnissen und Umgebungsverhältnissen eine Erfassungsunsicherheit von Satellitennavigationssystem 204 zu.

Ebenso wird eine Erfassungsunsicherheit von Odometrienavigationssystem 203 ermittelt, indem zunächst mittels des Kamerasensors ein Fahrbahnbelag, mittels des Temperatursensors eine Temperatur und mittels des Regensensors ein Niederschlag bestimmt werden. Vorzugsweise wird die Bestimmung des Fahrbahnbelags zusätzlich aus der digitalen Karte ausgelesen. Anschließend werden die Parameter des stochastischen Rauschmodells, welches die erfassten Messwerte entsprechend ihrem Messrauschen gegen die Messwerte des Basissystems gewichtet, entsprechend der erkannten Erfassungsunsicherheit, also entsprechend dem Fahrbahnbelag, der Temperatur und dem Niederschlag, nach Maßgabe eines weiteren Kennfeldes angepasst. Das weitere Kennfeld ordnet dabei der jeweils spezifischen Kombination aus Fahrbahnbelag, Temperatur und Niederschlag eine Erfassungsunsicherheit von Odometrienavigationssystem 203 zu.

Die beiden genannten Kennfelder sind unabhängig voneinander und in einem nicht dargestellten elektronischen Speicher im Fahrzeug digital abgelegt.

## Patentansprüche

1. Verfahren zur Anpassung eines Navigationssystems,
wobei das Navigationssystem ein Trägheitsnavigationssystem (101, 201) und ein globales Satellitennavigationssystem und ein Odometrienavigationssystem (103, 104, 203, 204) umfasst, wobei vom Trägheitsnavigationssystem (101, 201) und von dem globalen Satellitennavigationssystem und Odometrienavigationssystem jeweils Messwerte erfasst werden, wobei die Messwerte Navigationsdaten beschreiben, wobei die Messwerte jeweils mit Fehlerwerten behaftet sind, wobei die Fehlerwerte Abweichungen der Messwerte von den beschriebenen Navigationsdaten beschreiben,
wobei eine Erkennung zumindest der Fehlerwerte der Messwerte des Trägheitsnavigationssystems (101, 201) mittels der Messwerte des globalen Satellitennavigationssystems und des Odometrienavigationssystems (103, 104, 203, 204) erfolgt, wobei die Erkennung unter Berücksichtigung einer Erfassungsunsicherheit des globalen Satellitennavigationssystems und des Odometrienavigationssystems (103, 104, 203, 204) erfolgt,
wobei die Berücksichtigung eine Anpassung von Parametern eines stochastischen Rauschmodells darstellt und wobei das stochastische Rauschmodell nach Maßgabe der Parameter eine Gewichtung von Messwerten des globalen Satellitennavigationssystems und des Odometrienavigationssystems (103, 104, 203, 204) gegenüber Messwerten des Trägheitsnavigationssystems (101, 201) vorgibt,
**dadurch gekennzeichnet,**
**dass** die Anpassung der Parameter abhängig von der Erfassungsunsicherheit nach Maßgabe einer Kennlinie oder eines Kennfeldes gewählt wird,
wobei die Kennlinie oder das Kennfeld eine, mittels i) einer theoretischen Modellierung, ii) einer Messreihe, oder iii) einer Versuchsreihe bestimmte, Abhängigkeit der Erfassungsunsicherheit von auf das Navigationssystem wirkenden Einflüssen beschreibt.

2. Verfahren nach Anspruch 1, **dadurch gekennzeichnet, dass** zusätzlich eine Korrektur zumindest der Fehlerwerte der Messwerte des Trägheitsnavigationssystems (101, 201) mittels der Messwerte des globalen Satellitennavigationssystems und des Odometrienavigationssystems (103, 104, 203, 204) erfolgt, wobei die Korrektur unter Berücksichtigung der Erfassungsunsicherheit der des globalen Satellitennavigationssystems und des Odometrienavigationssystems (103, 104, 203, 204) erfolgt.

3. Verfahren nach Anspruch 1 oder 2, **dadurch gekennzeichnet, dass** die Kennlinie oder das Kennfeld mittels einer theoretischen Modellierung oder mittels einer Messreihe bestimmt werden.

4. Verfahren nach einem der vorherigen Ansprüche, **dadurch gekennzeichnet, dass** die Erfassungsunsicherheit durch einen lonosphäreneinfluss und/oder eine elektromagnetische Störung und/oder elektromagnetische Brechungseffekte und/oder elektromagnetische Beugungseffekte und/oder elektromagnetische Reflektionseffekte im Signalausbreitungsweg von Signalen des globalen Satellitennavigationssystems (104, 204) geprägt ist.

5. Verfahren nach mindestens einem der Ansprüche 1 bis 4, **dadurch gekennzeichnet, dass** die Erfassungsunsicherheit mittels Umfeldsensorik bestimmt wird.

6. Verfahren nach mindestens einem der Ansprüche 1 bis 5, **dadurch gekennzeichnet, dass** die Erfassungsunsicherheit der Korrektursysteme (103, 104, 203, 204) mittels einer digitalen Karte bestimmt wird.

7. Verfahren nach mindestens einem der Ansprüche 1 bis 6, **dadurch gekennzeichnet, dass** die Messwerte zu einem gemeinsamen Fusionsdatensatz fusioniert werden.

8. Verfahren nach mindestens einem der Ansprüche 2 bis 7, **dadurch gekennzeichnet, dass** die Erkennung und/oder die Korrektur mittels eines Error-State-Space-Filters erfolgen.

9. System zur Anpassung eines Navigationssystems,
wobei das Navigationssystem ein Trägheitsnavigationssystem (101, 201) und ein globales Satellitennavigationssystem und ein Odometrienavigationssystem umfasst, wobei das Trägheitsnavigationssystem (101, 201) und das globale Satellitennavigationssystem und das Odometrienavigationssystem (103, 104, 203, 204) jeweils dazu ausgebildet sind, Messwerte zu erfassen, wobei die Messwerte Navigationsdaten beschreiben, wobei die Messwerte jeweils mit Fehlerwerten behaftet sind, wobei die Fehlerwerte Abweichungen der Messwerte von den beschriebenen Navigationsdaten beschreiben,
wobei das System dazu ausgebildet ist, eine Erkennung zumindest der Fehlerwerte der Messwerte des Trägheitsnavigationssystems (101, 201) mittels der Messwerte des globalen Satellitennavigationssystems und des Odometrienavigationssystems (103, 104, 203, 204) durchzuführen, wobei das System dazu ausgebildet ist, die Erkennung unter Berücksichtigung einer Erfassungsunsicherheit des globalen Satellitennavigationssystems und des Odometrienavigationssystems (103, 104, 203, 204) durchzuführen,
wobei die Berücksichtigung eine Anpassung von Parametern eines stochastischen Rauschmodells darstellt und wobei das stochastische Rauschmodell nach Maßgabe der Parameter eine Gewichtung von Messwerten der des globalen Satellitennavigationssystems und des Odometrienavigationssystems (103, 104, 203, 204) gegenüber Messwerten des Trägheitsnavigationssystems (101, 201) vorgibt,
**dadurch gekennzeichnet,**
**dass** das System dazu ausgebildet ist, die Anpassung der Parameter abhängig von der Erfassungsunsicherheit nach Maßgabe einer Kennlinie oder eines Kennfeldes zu wählen,
wobei die Kennlinie oder das Kennfeld eine, mittels i) einer theoretischen Modellierung, ii) einer Messreihe, oder iii) einer Versuchsreihe bestimmte, Abhängigkeit der Erfassungsunsicherheit von auf das Navigationssystem wirkenden Einflüssen beschreibt.

10. System nach Anspruch 9, **dadurch gekennzeichnet, dass** das System dazu ausgebildet ist, ein Verfahren nach mindestens einem der Ansprüche 1 bis 8 auszuführen.

11. Verwendung des Systems nach mindestens einem der Ansprüche 9 und 10 in einem Kraftfahrzeug.

## Claims

1. Method for adapting a navigation system,
wherein the navigation system comprises an inertial navigation system (101, 201) and a global satellite navigation system and an odometric navigation system (103, 104, 203, 204), the inertial navigation system (101, 201) and the global satellite navigation system and the odometric navigation system each capturing measured values, the measured values describing navigation data, the measured values each being afflicted by error values, the error values describing deviations in the measured values from the described navigation data,
wherein at least the error values of the measured values of the inertial navigation system (101, 201) are detected by means of the measured values of the global satellite navigation system and of the odometric navigation system (103, 104, 203, 204), the detection taking place in consideration of a capture uncertainty of the global satellite navigation system and of the odometric navigation system (103, 104, 203, 204),
wherein the consideration is an adaptation of parameters of a stochastic noise model and wherein the stochastic noise model takes the parameters as a basis for predefining a weighting of measured values of the global satellite navigation system and of the odometric navigation system (103, 104, 203, 204) compared to measured values of the inertial navigation system (101, 201),
**characterized**
**in that** the adaptation of the parameters is chosen according to the capture uncertainty based on a characteristic curve or a family of characteristic curves, the characteristic curve or the family of characteristic curves describing a dependency, determined by means of i) a theoretical modelling, ii) a measurement series, or iii) a series of experiments, of the capture uncertainty on influences acting on the navigation system.

2. Method according to Claim 1, **characterized in that** at least the error values of the measured values of the inertial navigation system (101, 201) are additionally corrected by means of the measured values of the global satellite navigation system and of the odometric navigation system (103, 104, 203, 204), the correction being made in consideration of the capture uncertainty of the global satellite navigation system and of the odometric navigation system (103, 104, 203, 204).

3. Method according to Claim 1 or 2, **characterized in that** the characteristic curve or the family of characteristic curves is determined by means of a theoretical modelling or by means of a measurement series.

4. Method according to one of the preceding claims, **characterized in that** the capture uncertainty is created by an ionospheric influence and/or electromagnetic interference and/or electromagnetic refraction effects and/or electromagnetic diffraction effects and/or electromagnetic reflection effects in the signal propagation path of signals of the global satellite navigation system (104, 204).

5. Method according to at least one of Claims 1 to 4, **characterized in that** the capture uncertainty is determined by means of an environment sensor system.

6. Method according to at least one of Claims 1 to 5, **characterized in that** the capture uncertainty of the correction systems (103, 104, 203, 204) is determined by means of a digital map.

7. Method according to at least one of Claims 1 to 6, **characterized in that** the measured values are fusioned to produce a joint fusion dataset.

8. Method according to at least one of Claims 2 to 7, **characterized in that** the detection and/or correction take place by means of an error state space filter.

9. System for adapting a navigation system,
wherein the navigation system comprises an inertial navigation system (101, 201) and a global satellite navigation system and an odometric navigation system, the inertial navigation system (101, 201) and the global satellite navigation system and the odometric navigation system (103, 104, 203, 204) each being designed to capture measured values, the measured values describing navigation data, the measured values each being afflicted by error values, the error values describing deviations in the measured values from the described navigation data,
wherein the system is designed to perform detection of at least the error values of the measured values of the inertial navigation system (101, 201) by means of the measured values of the global satellite navigation system and of the odometric navigation system (103, 104, 203, 204), the system being designed to perform the detection in consideration of a capture uncertainty of the global satellite navigation system and of the odometric navigation system (103, 104, 203, 204),
wherein the consideration is an adaptation of parameters of a stochastic noise model and wherein the stochastic noise model takes the parameters as a basis for predefining a weighting of measured values of the global satellite navigation system and of the odometric navigation system (103, 104, 203, 204) compared to measured values of the inertial navigation system (101, 201),
**characterized**
**in that** the system is designed to choose the adaptation of the parameters according to the capture uncertainty based on a characteristic curve or a family of characteristic curves,
the characteristic curve or the family of characteristic curves describing a dependency, determined by means of i) a theoretical modelling, ii) a measurement series, or iii) a series of experiments, of the capture uncertainty on influences acting on the navigation system.

10. System according to Claim 9, **characterized in that** the system is designed to carry out a method according to at least one of Claims 1 to 8.

11. Use of the system according to at least either of Claims 9 and 10 in a motor vehicle.

## Revendications

1. Procédé d'adaptation d'un système de navigation,
le système de navigation comprenant un système de navigation inertielle (101, 201) et un système mondial de navigation par satellite et un système de navigation odométrique (103, 104, 203, 204), des valeurs de mesure étant acquises par le système de navigation inertielle (101, 201) et par le système mondial de navigation par satellite et le système de navigation odométrique, les valeurs de mesure décrivant des données de navigation, les valeurs de mesure étant chacune entachées de valeurs d'erreur, les valeurs d'erreur décrivant les écarts des valeurs de mesure par rapport aux données de navigation décrites,
une détection au moins des valeurs d'erreur des valeurs de mesure du système de navigation inertielle (101, 201) étant effectuée à l'aide des valeurs de mesure du système mondial de navigation par satellite et du système de navigation odométrique (103, 104, 203, 204), la détection étant effectuée avec prise en compte d'une incertitude d'acquisition du système mondial de navigation par satellite et du système de navigation odométrique (103, 104, 203, 204),
la prise en compte représentant une adaptation de paramètres d'un modèle de bruit stochastique et le modèle de bruit stochastique spécifiant une pondération de valeurs de mesure du système mondial de navigation par satellite et du système de navigation odométrique (103, 104, 203, 204) par rapport aux valeurs de mesure du système de navigation inertielle (101, 201) conformément aux paramètres,
**caractérisé en ce que**
l'adaptation des paramètres est choisie en fonction de l'incertitude d'acquisition conformément à une courbe caractéristique ou un diagramme caractéristique,
la courbe caractéristique ou le diagramme caractéristique décrivant une dépendance de l'incertitude d'acquisition vis-à-vis d'influences agissant sur le système de navigation, ladite dépendance étant déterminée à l'aide i) d'une modélisation théorique, ii) d'une série de mesures ou iii) d'une série d'essais.

2. Procédé selon la revendication 1, **caractérisé en ce qu'**une correction au moins des valeurs d'erreur des valeurs de mesure du système de navigation inertielle (101, 201) est en outre effectuée à l'aide des valeurs de mesure du système mondial de navigation par satellite et du système de navigation odométrique (103, 104, 203, 204), la correction étant effectuée avec prise en compte de l'incertitude d'acquisition du système mondial de navigation par satellite et du système de navigation odométrique (103, 104, 203, 204).

3. Procédé selon la revendication 1 ou 2, **caractérisé en ce que** la courbe caractéristique ou le diagramme caractéristique est déterminé à l'aide d'une modélisation théorique ou d'une série de mesures.

4. Procédé selon l'une des revendications précédentes, **caractérisé en ce que** l'incertitude d'acquisition est marquée par une influence ionosphérique et/ou des interférences électromagnétiques et/ou des effets de réfraction électromagnétique et/ou des effets de diffraction électromagnétique et/ou des effets de réflexion électromagnétique dans le chemin de propagation de signaux du système mondial de navigation par satellite (104, 204).

5. Procédé selon l'une au moins des revendications 1 à 4, **caractérisé en ce que** l'incertitude d'acquisition est déterminée à l'aide de capteurs d'environnement.

6. Procédé selon l'une au moins des revendications 1 à 5, **caractérisé en ce que** l'incertitude d'acquisition des systèmes de correction (103, 104, 203, 204) est déterminée à l'aide d'une carte numérique.

7. Procédé selon l'une au moins des revendications 1 à 6, **caractérisé en ce que** les valeurs de mesure sont fusionnées pour former un ensemble de données de fusion commun.

8. Procédé selon l'une au moins des revendications 2 à 7, **caractérisé en ce que** la détection et/ou la correction sont effectuées à l'aide d'un filtre d'espace d'état d'erreur.

9. Système d'adaptation d'un système de navigation,
le système de navigation comprenant un système de navigation inertielle (101, 201) et un système mondial de navigation par satellite et un système de navigation odométrique, le système de navigation inertielle (101, 201) et le système mondial de navigation par satellite et le système de navigation odométrique (103, 104, 203, 204) étant chacun conçus pour acquérir des valeurs de mesure, les valeurs de mesure décrivant les données de navigation, les valeurs de mesure étant chacune entachées de valeurs d'erreur, les valeurs d'erreur décrivant les écarts des valeurs de mesure par rapport aux données de navigation décrites,
le système étant conçu pour effectuer une détection au moins des valeurs d'erreur des valeurs de mesure du système de navigation inertielle (101, 201) à l'aide des valeurs de mesure du système mondial de navigation par satellite et la navigation odométrique système (103, 104, 203, 204),
le système étant conçu pour effectuer la détection avec prise en compte d'une incertitude d'acquisition du système mondial de navigation par satellite et du système de navigation odométrique (103, 104, 203, 204),
la prise en compte représentant une adaptation de paramètres d'un modèle de bruit stochastique et le modèle de bruit stochastique spécifiant une pondération des valeurs de mesure du système mondial de navigation par satellite et du système de navigation odométrique (103, 104, 203, 204) par rapport aux valeurs de mesure du système de navigation inertielle (101, 201) conformément aux paramètres,
**caractérisé en ce que**
le système est conçu pour sélectionner l'adaptation des paramètres en fonction de l'incertitude d'acquisition conformément à une courbe caractéristique ou une carte caractéristique,
la courbe caractéristique ou la carte caractéristique décrivant une dépendance de l'incertitude d'acquisition vis-à-vis d'influences agissant sur le système de navigation, ladite dépendance étant déterminée à l'aide i) d'une modélisation théorique, ii) d'une série de mesures, ou iii) d'une série d'essais.

10. Système selon la revendication 9, **caractérisé en ce que** le système est conçu pour mettre en oeuvre un procédé selon l'une au moins des revendications 1 à 8.

11. Utilisation du système selon l'une au moins des revendications 9 et 10 dans un véhicule automobile.
